# EUROPÄISCHE PATENTSCHRIFT

(11) **EP 4 314 117 B1**
(45) Veröffentlichungstag und Bekanntmachung des Hinweises auf die Patenterteilung: **11.09.2024**
(21) Anmeldenummer: 21715830.2
(22) Anmeldetag: 24.03.2021
(51) Int. Cl.: C08G 77/10, C08G 77/20

(54) **VERFAHREN ZUR HERSTELLUNG VON ORGANOPOLYSILOXANEN MIT UNGESÄTTIGTEN RESTEN**
METHOD FOR PRODUCING ORGANOPOLYSILOXANES WITH UNSATURATED GROUPS
PROCÉDÉ DE PRODUCTION D'ORGANOPOLYSILOXANES À GROUPES INSATURÉS

(43) Veröffentlichungstag der Anmeldung: 07.02.2024
(73) Patentinhaber: Wacker Chemie AG, 81671 München (DE)
(72) Erfinder: MERGET, Markus, 84561 Mehring (DE); BINDL, Johann, 84489 Burghausen (DE)
(74) Vertreter: Mieskes, Klaus Theoderich
(86) Internationale Anmeldenummer: PCT/EP2021/057606
(87) Internationale Veröffentlichungsnummer: WO 2022/199814

(56) Entgegenhaltungen:
- WO-A1-2006/055233
- US-B1- 6 399 210

## Beschreibung

Die Erfindung betrifft ein Verfahren zur Herstellung von Organopolysiloxanen mit ungesättigten Resten durch basisch katalysierte Equilibrierung bzw. Kondensation.

Die Herstellung von funktionellen Organopolysiloxanen über die alkalisch katalysierte Equilibrierung ist in vielen Veröffentlichungen und im Stand der Technik beschrieben. So sind Katalysatoren wie Alkali-, Ammonium-, Phosphoniumhydroxiden oder -sil(ox)anolaten z.B. aus J. Polym. Sci., Part C No. 16, 669-677 (1967); Makromol. Chem., Macromol. Symp. 6, 67-80 (1986); und Polym.Prepr. 29 (1), 123-125 (1988) bekannt.

In EP 628589 B1 wird die Verwendung von Strontium- oder Bariumhydroxid zusammen mit Natriumboraten oder -phosphaten beschrieben. Metallhydroxide bringen jedoch den Nachteil mit sich, dass sie in den dort beschriebenen Verfahren am Ende der Reaktion zur Deaktivierung mit Säuren neutralisiert werden müssen. Dies führt zu unerwünschten Trübungen und salzartigen Ausfällungen.

In EP-A 2055777 wird ein mehrstufiges Verfahren zur Herstellung von Aminoalkylgruppen aufweisenden Organopolysiloxan beschrieben. Dabei kann die Deaktivierung des basischen Katalysators mit langkettigen Carbonsäuren erfolgen.

WO 2006/055233 A1 offenbart die Herstellung von Organopolysiloxanen mit ungesättigten Resten in Gegenwart eines basischen Katalysators.

Aufgabe der Erfindung ist es, ein vorteilhaftes Verfahren zur Herstellung von ungesättigten Organopolysiloxanen bereitzustellen. Die Aufgabe wird durch die Erfindung gelöst. Gegenstand der Erfindung ist ein Verfahren zur Herstellung von Organopolysiloxanen mit ungesättigten Resten, wobei
in einem 1. Schritt
   Organopolysiloxane (A) enthaltend Einheiten der Formel

   RₐQ_{b}SiO_{(4-a-b)/2} (I),

   wobei
   R gleich oder verschieden sein kann und einen einwertigen, gesättigten, gegebenenfalls mit Fluor-, Chlor- oder Bromatomen substituierten Kohlenwasserstoffrest mit 1 bis 18 Kohlenstoffatomen bedeutet,
   Q gleich oder verschieden sein kann und ungesättigte Kohlenwasserstoffreste bedeutet, die aromatische und/oder aliphatische Doppelbindungen enthalten können,
   a 0, 1, 2 oder 3, vorzugsweise 1, 2 oder 3, ist und
   b 0, 1, 2 oder 3, vorzugsweise 0 oder 1, ist,
   mit der Maßgabe, dass die Summe a+b≤3 ist und die Siloxane (A) mindestens einen Rest Q aufweisen,
   Organopolysiloxane (B) enthaltend Einheiten der Formel

   R²_{d}(OR¹)_{f}SiO_{(4-d-f)/2} (II),

   wobei
   R² gleich oder verschieden sein kann und einen einwertigen, gesättigten, gegebenenfalls mit Fluor-, Chlor- oder Bromatomen substituierten Kohlenwasserstoffrest mit 1 bis 18 Kohlenstoffatomen bedeutet,
   R¹ gleich oder verschieden sein kann und Wasserstoffatom oder Alkylreste mit 1 bis 4 Kohlenstoffatomen, die durch Sauerstoffatome substituiert sein können, bedeutet,
   d 0, 1, 2 oder 3, vorzugsweise 2, ist und
   f 0, 1, 2 oder 3, vorzugsweise 0 oder 1, ist,
   mit der Maßgabe, dass die Summe aus d+f≤3 ist,
   gegebenenfalls Organopolysiloxanverbindungen (C), die pro Molekül mindestens eine Struktureinheit der allgemeinen Formel

   O_{3-(e+g)/2}R²ₑQ¹_{g}Si-Y(SiR³ₑQ¹_{g}O_{3-(e+g)/2})_{c} (III)

   enthalten, wobei
   R³ gleich oder verschieden sein kann und einen einwertigen, gesättigten, gegebenenfalls mit Fluor-, Chlor- oder Bromatomen substituierten Kohlenwasserstoffrest mit 1 bis 18 Kohlenstoffatomen bedeutet,
   Q¹ gleich oder verschieden sein kann und ungesättigte Kohlenwasserstoffreste bedeutet, die aromatische und/oder aliphatische Doppelbindungen enthalten können,
   Y einen zwei- bis zwölfwertigen organischen Rest mit 1 bis 30 Kohlenstoffatomen, der ein oder mehrere Sauerstoffatome enthalten kann, bedeutet,
   e 0 oder 1 ist,
   c eine ganze Zahl von 1 bis 11 ist und
   g 0 oder 1 ist,
   mit der Maßgabe, dass die Summe e+g≤2 ist,
      und
   basische Katalysatoren (D), ausgewählt aus der Gruppe der Alkalihydroxide, Alkalialkoholate und Alkalisiloxanolate,
   miteinander vermischt werden,
in einem 2. Schritt
   die im 1. Schritt erhaltene Mischung bei Temperaturen von 80 bis 170°C reagieren gelassen wird und
in einem 3. Schritt
   die im 2. Schritt erhaltene Reaktionsmischung mit Carbonsäurederivaten mit mindestens 4 Kohlenstoffatomen (E) neutralisiert wird.

Im Rahmen der vorliegenden Erfindung sollen von dem Begriff Organopolysiloxane sowohl polymere, oligomere wie auch dimere Siloxane mitumfasst werden.

Beispiele für Kohlenwasserstoffreste R, R² und R³ sind unabhängig voneinander Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; sowie Cycloalkylreste, wie Cyclopentyl-, Cyclohexyl-, Cycloheptyl- und Methylcyclohexylreste.

Beispiele für substituierte Reste R, R² und R³ sind unabhängig voneinander Halogenalkylreste, wie der 2,2,2,2',2',2'-Hexafluor-isopropylrest, der 3,3,3-Trifluor-n-propyl¬rest, der Heptafluorisopropylrest und Halogenarylreste, wie der o-, m- und p-Chlorphenylrest.

Bevorzugt handelt es sich bei den Resten R, R² und R³ unabhängig voneinander um einen einwertigen Kohlenwasserstoffrest mit 1 bis 6 Kohlenstoffatomen, wobei der Methylrest besonders bevorzugt ist.

Beispiele für ungesättigte Kohlenwasserstoffreste Q und Q¹ sind unabhängig voneinander Alkenylreste, wie der Vinyl-, Allyl-, 5-Hexen-1-yl-, E-4-Hexen-1-yl-, Z-4-Hexen-1-yl-, 2-(3-Cyclohexenyl)-ethyl- und Cyclododeca-4,8-dienylrest.

Bevorzugt handelt es sich bei den Resten Q und Q¹ unabhängig voneinander um Reste mit aliphatischer Doppelbindung, besonders bevorzugt um den Vinyl-, Allyl- oder 5-Hexen-1-yl-rest, insbesondere um den Vinylrest.

Bevorzugt handelt es sich bei den erfindungsgemäß eingesetzten Siloxanen (A) um im Wesentlichen lineare, verzweigte oder cyclische Siloxane, wobei die linearen Siloxane die ungesättigten Reste endständig und/oder seitenständig aufweisen können.

Besonders bevorzugt handelt es sich bei den erfindungsgemäß eingesetzten Siloxanen (A) um solche der Formel

QₕR₃₋ₕSiO(R₂SiO)ₓ(QRSiO)_{y}SiR₃₋ₕQₕ (IV),

wobei R und Q jeweils die oben angegebene Bedeutung haben,
h 0, 1, 2 oder 3, bevorzugt 1, ist,
x 0 oder eine ganze Zahl von 1 bis 500 ist und
y 0 oder eine ganze Zahl von 1 bis 50, bevorzugt 0, ist, mit der Maßgabe, dass die Verbindungen der Formel (IV) mindestens einen Rest Q aufweisen.

Wenngleich in Formel (IV) nicht dargestellt können herstellungsbedingt zusätzlich zu in Formel (IV) dargestellten Einheiten noch andere Siloxaneinheiten vorliegen, wie beispielsweise Siloxaneinheiten -SiO_{3/2}, die als Verunreinigung vorliegen können, bevorzugt bis maximal 10 Mol-%.

Beispiele für erfindungsgemäß eingesetzte Siloxane (A) sind ViMe₂SiO(Me₂SiO)₁₀₋₂₀₀SiMe₂Vi, Allyl(Me₂)SiO(Me₂SiO)₁₀₋₂₀₀Si(Me₂)Allyl, ViEt₂SiO(Et₂SiO)₁₀₋₂₀₀SiEt₂Vi und (5-Hexen-1-yl) Me₂SiO(Me₂SiO)₁₀₋₂₀₀SiMe₂(5-Hexen-1-yl), wobei ViMe₂SiO(Me₂SiO)₁₀₋₁₀₀SiMe₂Vi, Allyl(Me₂)SiO(Me₂SiO)₁₀₋₁₀₀Si(Me₂)Allyl, ViEt₂SiO(Et₂SiO)₁₀₋₁₀₀SiEt₂Vi oder (5-Hexen-1-yl)Me₂SiO(Me₂SiO)₁₀₋₁₀₀SiMe₂(5-Hexen-1-yl) bevorzugt und ViMe₂SiO(Me₂SiO)₁₀₋₂₀SiMe₂Vi, Allyl(Me₂)SiO(Me₂SiO)₁₀₋₂₀Si(Me₂)Allyl, ViEt₂SiO(Et₂SiO)₁₀₋₂₀SiEt₂Vi oder (5-Hexen-1-yl)Me₂SiO(Me₂SiO)₁₀₋₂₀SiMe₂(5-Hexen-1-yl) besonders bevorzugt sind mit Me gleich Methylrest, Et gleich Ethylrest, Allyl gleich Allylrest und Vi gleich Vinylrest.

Die erfindungsgemäß eingesetzten Organopolysiloxane (A) weisen eine Viskosität von vorzugsweise 5 bis 100000 mPa.s, bevorzugt 10 bis 100 mPa.s, jeweils bei 25°C auf.

Bei der erfindungsgemäß eingesetzten Komponente (A) handelt es sich um handelsübliche Produkte bzw. können diese nach in der Chemie gängigen Verfahren hergestellt werden.

Bei dem erfindungsgemäßen Verfahren werden Organopolysiloxane (A) vorzugsweise in Mengen von 1,0 bis 40 Gew.-%, bevorzugt 10 bis 30 Gew.-%, jeweils bezogen auf das Gesamtgewicht der Organosiliciumverbindungen (A), (B) und gegebenenfalls (C), eingesetzt.

Beispiele für Kohlenwasserstoffreste R¹, die mit Sauerstoffatomen unterbrochen sein können, sind Alkylreste, wie der Methyl-, Ethyl-, n-Propyl-, iso-Propyl-, 1-n-Butyl-, 2-n-Butyl-, iso-Butyl- und tert.-Butylrest sowie der Methoxyethyl- und der Ethoxyethylrest.

Bevorzugt handelt es sich bei Rest R¹ um Wasserstoffatom oder Kohlenwasserstoffreste mit 1 bis 3 Kohlenstoffatomen, besonders bevorzugt um Wasserstoffatom oder den Methylrest.

Die bei dem erfindungsgemäßen Verfahren eingesetzten Organopolysiloxane (B) können im Wesentlichen linear, verzweigt oder cyclisch sein, bevorzugt im Wesentlichen linear oder cyclisch.

Als Komponente (B) kann auch ein Gemisch aus im Wesentlichen linearen Siloxanen und Cyclosiloxanen eingesetzt werden.

Bevorzugt handelt es sich bei den cyclischen Siloxanen (B) um solche mit bevorzugt 3 bis 20 Siliciumatomen, besonders bevorzugt 3 bis 8 Siliciumatomen, insbesondere 4 bis 6 Siliciumatomen.

Falls es sich bei den im erfindungsgemäßen Verfahren eingesetzten Organopolysiloxanen (B) um cyclische Siloxane handelt, weisen diese bevorzugt keine Gruppen (OR¹) mit R¹ gleich der obengenannten Bedeutung auf.

Bevorzugt handelt es sich bei den im Wesentlichen linearen Siloxanen (B) um solche der allgemeinen Formel

(R¹O)R²₂SiO(R²₂SiO)_{z}SiR₂(OR¹) (V),

wobei
R² und R¹ jeweils die oben dafür angegebenen Bedeutungen haben und
z eine ganze Zahl von 20 bis 100 ist.

Wenngleich in Formel (V) nicht dargestellt, können herstellungsbedingt zusätzlich zu den in Formel (V) dargestellten Einheiten noch andere Siloxaneinheiten vorliegen, wie beispielsweise Siloxaneinheiten -SiO_{3/2}, die als Verunreinigung vorliegen können, bevorzugt bis maximal 10 Mol-%.

Beispiele für erfindungsgemäß eingesetzte Siloxane (B) sind OHMe₂SiO(Me₂SiO)₁₀₋₅₀₀SiMe₂OH,OHEt₂SiO(Et₂Si)₁₀₋₅₀₀SiEt₂OH und [Si(Me₂)O]₃₋₂₀, wobei
OHMe₂SiO(Me₂SiO)₁₀₋₂₀₀SiMe₂OH, OHEt₂SiO(Et₂Si)₁₀₋₂₀₀SiEt₂OH oder [Si(Me₂)O]₃₋₁₀ bevorzugt und
OHMe₂SiO(Me₂SiO)₁₀₋₁₀₀SiMe₂OH, OHEt₂SiO(Et₂Si)₁₀₋₁₀₀SiEt₂OH oder [Si(Me₂)O]₃₋₈ besonders bevorzugt sind mit Me gleich Methylrest und Et gleich Ethylrest.

Die erfindungsgemäß eingesetzten Organopolysiloxane (B) weisen eine Viskosität von vorzugsweise 1 bis 100000 mPa.s bei 25°C, bevorzugt 1 bis 200 mPa.s bei 25°C auf.

Bei der erfindungsgemäß eingesetzten Komponente (B) handelt es sich um handelsübliche Produkte bzw. können diese nach in der Chemie gängigen Verfahren hergestellt werden.

Bei dem erfindungsgemäßen Verfahren werden Organopolysiloxane (B) vorzugsweise in Mengen von 30 bis 99 Gew.-%, bevorzugt 70 bis 95 Gew.-%, jeweils bezogen auf das Gesamtgewicht der Organosiliciumverbindungen (A), (B) und gegebenenfalls (C), eingesetzt.

Vorzugsweise ist der Quotient aus Anzahl der Kohlenstoffatome in Rest Y und der Wertigkeit von Y maximal 10, bevorzugt maximal 5 und besonders bevorzugt maximal 3.

Rest Y ist vorzugsweise eine verbindende organische Einheit mit 1 bis 24 Kohlenstoffatomen zwischen zwei bis zwölf Siloxanyleinheiten (Si-Atomen). Bevorzugt ist Y zwei-, drei- oder vierwertig, besonders bevorzugt zweiwertig.

Beispiele für Y sind die Methylen-, die Methingruppe oder der vierwertige Kohlenstoff, die 1,1-Ethandiyl- und die 1,2-Ethandiylgruppe, die 1,4 Butandiyl- und die 1,3-Butandiylgruppe.

Enthält Y mindestens 2 C-Atome, kann dieser Rest auch ungesättigt sein, wie beispielsweise die -CH=CH-Gruppe (cis oder trans), die 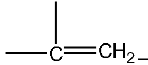 Gruppe sowie die -C≡C-Gruppe.

Besonders bevorzugt ist Rest Y eine organische Einheit mit maximal 12 Kohlenstoffatomen, insbesondere bevorzugt mit 2 Kohlenstoffatomen. Beispiele für insbesondere bevorzugte Reste Y sind -CH₂CH₂-, -CH(CH₃)-, -CH=CH-, -C(=CH₂)- oder -C≡C-.

Beispiele für gegebenenfalls eingesetzte Organosiliciumverbindungen (C) sind im Wesentlichen lineare, verzweigte, quervernetzte oder cyclische Siloxane.

Bevorzugt handelt es sich bei den gegebenenfalls eingesetzten Organosiliciumverbindungen (C) um solche der Formel 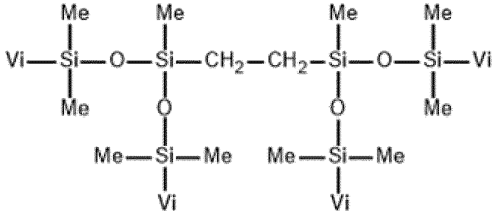 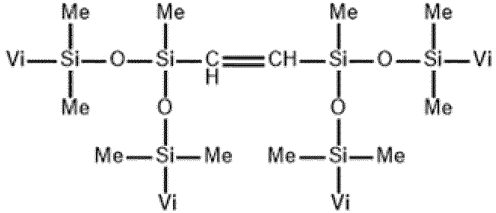 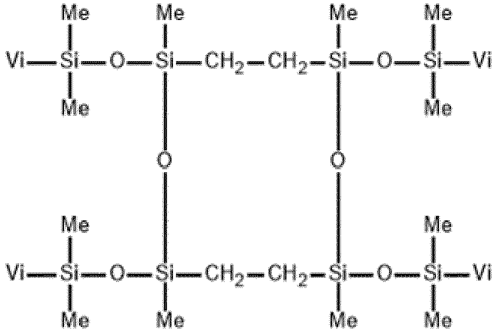 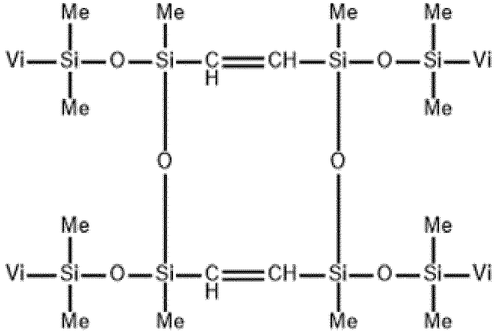 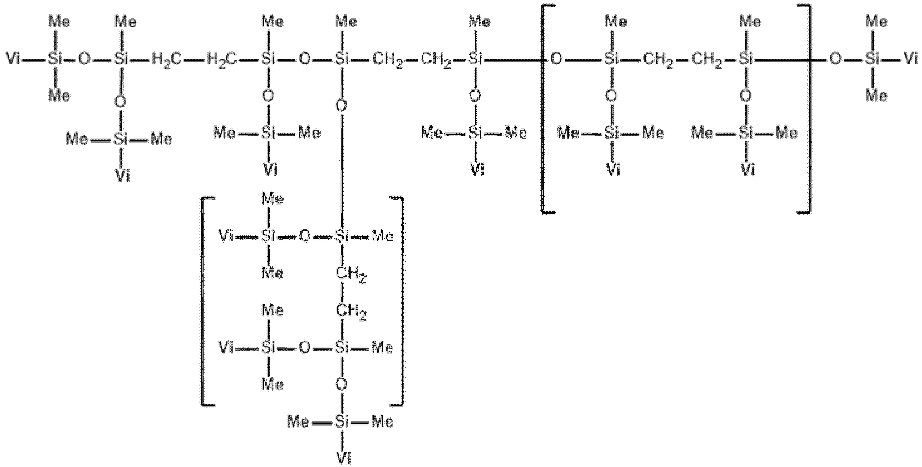 oder

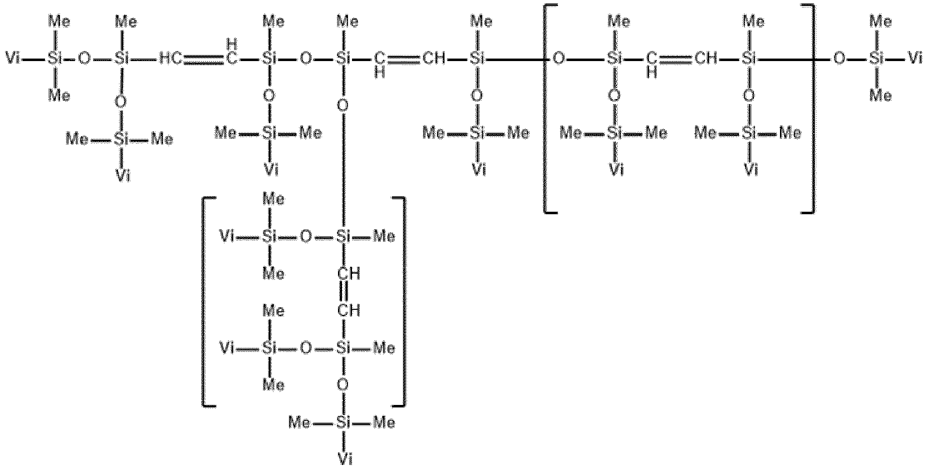

Die erfindungsgemäß gegebenenfalls eingesetzten Organopolysiloxane (C) weisen eine Viskosität von vorzugsweise 1 bis 1000 mPa.s bei 25°C, bevorzugt 1 bis 200 mPa.s bei 25°C auf.

Die erfindungsgemäß gegebenenfalls eingesetzten Organopolysiloxane (C) weisen eine Jodzahl von vorzugsweise 20 bis 200, bevorzugt 50 bis 150 mPa.s bei 25°C auf.

Als Jodzahl wird die Zahl bezeichnet, welche die bei der Addition an die aliphatische Mehrfachbindung verbrauchte Jodmenge in Gramm pro 100 Gramm eingesetztes, zu untersuchendes Material angibt.

Falls bei dem erfindungsgemäßen Verfahren Organosiliciumverbindungen (C) eingesetzt werden, handelt es sich um Mengen von vorzugsweise 1 bis 20 Gew.%, bevorzugt 2 bis 10 Gew.%, jeweils bezogen auf das Gesamtgewicht der Organosiliciumverbindungen (A), (B) und (C). Bei dem erfindungsgemäßen Verfahren wird bevorzugt Komponente (C) eingesetzt.

Bei der erfindungsgemäß gegebenenfalls eingesetzten Komponente (C) handelt es sich um Verbindungen, die nach in der Chemie gängigen Verfahren hergestellt werden können. Beispielsweise werden in EP-A 1917292 Organopolysiloxanverbindungen beschrieben, die pro Molekül mindestens eine Struktureinheit der allgemeinen Formel O_{3-a/2}RₐSi-Y(SiRₐ O_{3-a/2})_{b} enthalten, wobei R gleich oder verschieden sein kann und einen einwertigen SiC-gebundenen organischen Rest mit 1 bis 30 C-Atomen, der ein oder mehrere N und/oder O-Atome enthalten kann, bedeutet, Y einen zwei- bis zwölfwertigen organischen Rest mit 1 bis 30 C-Atomen, der ein oder mehrere O-Atome enthalten kann, bedeutet, a 0 oder 1 ist und b eine ganze Zahl von 1 bis 11 ist.

Bevorzugte Beispiele für die erfindungsgemäß eingesetzten Alkalihydroxide (D) sind Kaliumhydroxid oder Natriumhydroxid, wobei Kaliumhydroxid bevorzugt ist.

Bevorzugte Beispiele für die bei dem erfindungsgemäßen Verfahren eingesetzten Alkalialkoholate (D) sind Natriummethanolat, Natriumethanolat, Kaliummethanolat oder Kaliumethanolat, besonders bevorzugt Natriummethanolat oder Kaliummethanolat.

Bevorzugte Beispiele für die bei dem erfindungsgemäßen Verfahren eingesetzten Alkalisiloxanolate (D) sind Natriumsiloxanolate, Kaliumsiloxanolate oder Litiumsiloxanolate, besonders bevorzugt Natriumsiloxanolate oder Kaliumsiloxanolate, insbesondere Na-O-[Si(Me)₂-O]ₙ-Si(Me)₂-O-Na, Na-O-[Si(Me)₂-O]ₙ-Si(Me)₃, K-O-[Si(Me)₂-O]ₕ-Si(Me)₂-O-K und K-O-[Si(Me)₂-O]ₙ-Si(Me)₃ mit Me gleich Methylrest und n gleich einer Zahl von 10 bis 500.

Bei dem erfindungsgemäßen Verfahren werden als Katalysatoren (D) vorzugsweise Alkalihydroxide eingesetzt, insbesondere Kaliumhydroxid.

Bei dem erfindungsgemäßen Verfahren können Katalysatoren (D) in Reinform oder als Mischung mit organischem Lösemittel eingesetzt werden, wobei letzteres bevorzugt ist.

Besonders bevorzugt werden bei dem erfindungsgemäßen Verfahren Katalysatoren (D) im Gemisch mit Alkohol, bevorzugt Methanol, eingesetzt, wobei es sich im Fall von KOH bevorzugt um eine 20 Gew.-%ige Mischung in Methanol und im Fall von Natriummethanolat bevorzugt um eine 30 Gew.-%ige Mischung in Methanol handelt.

Bei dem erfindungsgemäßen Verfahren werden Katalysatoren (D) vorzugsweise in Mengen von 1 bis 1000 Gew.-ppm, bevorzugt 10 bis 400 Gew.-ppm, besonders bevorzugt 30 bis 200 Gew.-ppm, jeweils berechnet als Reinsubstanz und bezogen auf das Gesamtgewicht der Organosiliciumverbindungen (A) und (B) und gegebenenfalls (C) eingesetzt.

Zur Deaktivierung des basischen Katalysators (D) werden am Ende der erfindungsgemäßen Reaktion Neutralisationsmittel (E) eingesetzt, die mit den basischen Katalysatoren (D) Neutralisationsprodukte bilden, die im hergestellten Siloxan bei 25°C und 1013 hPa bevorzugt weitestgehend löslich sind. Weitestgehend löslich im Sinne der Erfindung bedeutet, dass das entstandene Neutralisationsprodukt bevorzugt zu mindestens 60 Gew.-%, besonders bevorzugt zu mindestens 80 Gew.-%, insbesondere vollständig, im hergestellten Organopolysiloxan gelöst ist.

Bevorzugt weisen die erfindungsgemäß eingesetzten Carbonsäurederivate (E) mindestens 8 Kohlenstoffatome auf.

Beispiele für solche Neutralisationsmittel (E) sind langkettige bei Raumtemperatur und Umgebungsdruck flüssige Carbonsäuren, wie n-Octansäure, 2-Ethylhexansäure, n-Nonansäure, 2-Butyloctansäure, 2-Butyldecansäure, 2-Butyldodecansäure, 2-Hexyldecansäure, 2-Heptylundecansäure, 2-Octyldodecansäure, 2-Decyl-tetradecensäure, Undecensäure, Ölsäure, Kohlensäureester wie Propylencarbonat, oder Carbonsäureanhydride, wie Octenylbernsteinsäureanhydrid.

Bevorzugt handelt es sich bei den erfindungsgemäß eingesetzten Neutralisationsmitteln (E) um 2-Ethylhexansäure, 2-Butyloctansäure, 2-Hexyldecansäure oder 2-Octyldodecansäure, wobei 2-Butyloctansäuresäure besonders bevorzugt ist.

Die nötige Menge an Neutralisationsmitteln (E) richtet sich nach der eingesetzten Menge an basischen Katalysatoren (D) und beträgt vorzugsweise 1 bis 10 Äquivalente, bevorzugt 1,2 bis 5 Äquivalente, besonders bevorzugt 1,5 bis 2,5 Äquivalente, jeweils bezogen auf Katalysator (D) in Reinsubstanz.

Das erfindungsgemäße Verfahren kann in Anwesenheit oder in Abwesenheit von organischen Lösungsmitteln (L) durchgeführt werden, wobei der Einsatz von Lösemitteln (L) nicht bevorzugt ist. Beispiele für geeignete Lösungsmittel (L) sind Alkohole, wie Methanol, Ethanol, n- Propanol, iso- Propanol; Ether, wie Dioxan, Tetrahydrofuran, Diethylether, Diethylenglycoldimethylether; chlorierte Kohlenwasserstoffe, wie Dichlormethan, Trichlormethan, Tetrachlormethan, 1,2-Dichlorethan, Trichlorethylen; Kohlenwasserstoffe, wie Pentan, n-Hexan, Hexan-Isomerengemische, Heptan, Oktan, Waschbenzin, Petrolether, Benzol, Toluol, Xylole; Ketone, wie Aceton, Methylethylketon, Methyl-isobutylketon; Schwefelkohlenstoff und Nitrobenzol, oder Gemische dieser Lösungsmittel.

Die Bezeichnung Lösungsmittel bedeutet nicht, dass sich alle Reaktionskomponenten in diesem lösen müssen. Die erfindungsgemäße Reaktion kann auch in einer Suspension oder Emulsion eines oder mehrerer Reaktionspartner durchgeführt werden.

Bei den im erfindungsgemäßen Verfahren eingesetzten Komponenten kann es sich jeweils um eine Art einer solchen Komponente wie auch um ein Gemisch aus mindestens zwei Arten einer jeweiligen Komponente handeln.

Im 1. Schritt des erfindungsgemäßen Verfahrens werden Komponenten (A), (B), gegebenenfalls (C) sowie basischer Katalysator (D) auf beliebige Art und Weise vermischt, wie beispielsweise durch einen Propellerrührer. Die Reihenfolge, in der die verschiedenen Bestandteile miteinander vermischt werden, kann dabei beliebig variiert werden, wobei bevorzugt Katalysator (D) zu einer Mischung aus Komponenten (A), (B), gegebenenfalls (C) zugegeben wird.

Der 1. Schritt des erfindungsgemäßen Verfahrens wird bevorzugt beim Druck der umgebenden Atmosphäre, also etwa 900 bis 1100 hPa, durchgeführt.

Der 1. Schritt des erfindungsgemäßen Verfahrens wird bevorzugt bei einer Temperatur von 20 bis 90°C, besonders bevorzugt 20 bis 85°C, durchgeführt.

Der 1. Schritt des erfindungsgemäßen Verfahrens wird bevorzugt unter Schutzgas, wie z.B. Stickstoff oder Argon, durchgeführt.

Im 2. Schritt des erfindungsgemäßen Verfahrens beträgt die Temperatur vorzugsweise 90 bis 150°C, besonders bevorzugt 110°C bis 140°C.

Der 2. Schritt des erfindungsgemäßen Verfahrens wird bei einem Druck von vorzugsweise 20 bis 1100 hPa, bevorzugt 100 und 1013 hPa, durchgeführt, wobei es besonders bevorzugt ist, zeitweilig oder ständig den Druck zu vermindern um flüchtige Verbindungen und/oder Luft zu entfernen. In einer bevorzugten Verfahrensweise des erfindungsgemäßen 2. Schritts wird zeitweilig oder ständig der Druck auf 30 bis 500 hPa vermindert und anschließend mit Schutzgas belüftet. Falls als Komponente (B) Cyclosiloxane eingesetzt werden, wird in einer weiteren bevorzugten Verfahrensvariante der 2. Schritt beim Druck der umgebenden Atmosphäre, also bei 900 bis 1100 hPa durchgeführt.

Falls im 2. Schritt flüchtige Verbindungen entfernt werden, handelt es sich bevorzugt um Wasser und/oder Alkohol.

Der 2. Schritt des erfindungsgemäßen Verfahrens wird vorzugsweise für die Dauer von 10 bis 240 Minuten, besonders bevorzugt von 30 bis 180 Minuten, durchgeführt. Die Dauer hängt vom eingesetzten Katalysator, der Katalysatormenge, der Reaktionstemperatur und dem gewünschten Equilibrierungsgrad bzw. Kondensationsgrad ab und kann je nach Verfahrensweise angepasst werden.

Nach erfolgter Umsetzung wird das Reaktionsgemisch in einem erfindungsgemäßen 3. Schritt durch Zusatz von Neutralisationsmittel (E) weiterverarbeitet.

Der 3. Schritt des erfindungsgemäßen Verfahrens wird vorzugsweise bei einer Temperatur von 100 bis 160°C, besonders bevorzugt von 120 bis 150°C, durchgeführt.

Der 3. Schritt des erfindungsgemäßen Verfahrens wird vorzugsweise bei einem Druck der umgebenden Atmosphäre, also etwa 1013 hPa, durchgeführt.

Der 3. Schritt des erfindungsgemäßen Verfahrens wird bevorzugt unter Schutzgas, wie z.B. Stickstoff oder Argon, durchgeführt.

Eine bevorzugte Verfahrensvariante ist dadurch gekennzeichnet, dass
in einem 1. Schritt
   Organopolysiloxane (A), Organopolysiloxane (B) und gegebenenfalls Organopolysiloxanverbindungen (C) bei Raumtemperatur vorgelegt und Katalysator (D) bei einer Temperatur von 20 bis 90°C zudosiert und miteinander vermischt werden,
in einem 2. Schritt
   die im 1. Schritt erhaltene Mischung bei Temperaturen von 90 bis 150°C und einem Druck von 20 bis 1100 hPa reagieren gelassen wird und
in einem 3. Schritt
   die im 2. Schritt erhaltene Reaktionsmischung mit Komponente (E) bei einer Temperatur von 100 bis 160°C neutralisiert wird.

Eine besonders bevorzugte Verfahrensvariante ist dadurch gekennzeichnet, dass
in einem 1. Schritt
   Organopolysiloxane (A), Cyclosiloxane (B) und gegebenenfalls Organopolysiloxanverbindungen (C) bei Raumtemperatur vorgelegt und Katalysator (D) bei einer Temperatur von 20 bis 90°C zudosiert und miteinander vermischt werden,
in einem 2. Schritt
   die im 1. Schritt erhaltene Mischung bei Temperaturen von 90 bis 150°C und einem Druck von 20 bis 1100 hPa reagieren gelassen wird und
in einem 3. Schritt
   die im 2. Schritt erhaltene Reaktionsmischung mit Komponente (E) bei einer Temperatur von 100 bis 160°C neutralisiert wird.

Eine weitere bevorzugte Verfahrensvariante ist dadurch gekennzeichnet, dass
in einem 1. Schritt
   Organopolysiloxane (A), Organopolysiloxane (B) und Organopolysiloxanverbindungen (C) bei Raumtemperatur vorgelegt und Katalysator (D) bei einer Temperatur von 20 bis 90°C zudosiert und miteinander vermischt werden,
in einem 2. Schritt
   die im 1. Schritt erhaltene Mischung bei Temperaturen von 90 bis 150°C und einem Druck von 20 bis 1100 hPa reagieren gelassen wird und
in einem 3. Schritt
   die im 2. Schritt erhaltene Reaktionsmischung mit Komponente (E) bei einer Temperatur von 100 bis 160°C neutralisiert wird.

Die im 3. Schritt erhaltene Reaktionsmischung kann nun - falls erwünscht - nach beliebigen und bisher bekannten Methoden aufgearbeitet werden. Z.B. kann sie durch Destillation von flüchtigen Bestandteilen, insbesondere Cyclen, befreit werden. Falls die Reaktionsmischung nach Beendigung des 3. Schritts destillativ aufgearbeitet werden soll, findet die Destillation bevorzugt bei Temperaturen von 140 bis 170°C und einem Druck von 1 bis 50 hPa statt.

Das erfindungsgemäße Verfahren kann absatzweise, halbkontinuierlich oder vollkontinuierlich durchgeführt werden.

Nach dem erfindungsgemäßen Verfahren wird eine bei Raumtemperatur und Umgebungsdruck klare Flüssigkeit erhalten, die vorteilhafterweise nicht filtriert werden muss, da das Neutralisationsprodukt aus Katalysator (D) und Komponente (E) in der Siloxanmatrix weitestgehend gelöst ist. Die erfindungsgemäß hergestellte Flüssigkeit enthält bevorzugt keine Komponente (D) .

Nach dem erfindungsgemäßen Verfahren werden ungesättigte Organopolysiloxane erhaltend, die im Wesentlichen linear oder verzweigt sein können, wobei die ungesättigten Reste endständig und/oder seitenständig sein können. Die nach dem erfindungsgemäßen Verfahren hergestellten Siloxane liegen bevorzugt als Gemisch mit dem Neutralisationsprodukt aus den Komponenten (D) und (E) und gegebenenfalls überschüssiger Komponente (E) vor.

Bei den nach dem erfindungsgemäßen Verfahren hergestellten Organopolysiloxanen kann die Viskosität über einen weiten Bereich variieren, wobei die Viskosität bevorzugt im Bereich von 10 bis 100 000 mPa·s, besonders bevorzugt 50 bis 1 000 mPa·s, liegt.

Bei den nach dem erfindungsgemäßen Verfahren hergestellten Organopolysiloxanen kann die Jodzahl über einen weiten Bereich variieren, wobei die Jodzahl bevorzugt im Bereich von 1 bis 100, besonders bevorzugt 2 bis 20, liegt.

Die erfindungsgemäß hergestellten Organopolysiloxane zeigen eine Trübung von bevorzugt 0 bis 65 FTU, besonders bevorzugt 0 bis 35 FTU.

Die Trübungsmessung im Rahmen der Erfindung erfolgt in Anlehnung an die Vorschrift DIN EN 27027. Die angegeben Trübungswerte basieren dabei auf dem in einem Winkel von 25° gemessenen Streulicht. Die Proben werden für die Messung bevorzugt blasenfrei in eine 250 ml Glasflasche (Durchmesser: 68 mm, Höhe: 115 mm) gefüllt und mit dem Gerät LabScat der Firma Sigrist bei einer Wellenlänge von 650 nm gemessen. Die Ergebnisse werden in der Einheit FTU (Formazine Turbidity Unit) angegeben.

Die erfindungsgemäß hergestellten Organopolysiloxane können nun für beliebige und bisher bekannte Zwecke eingesetzt werden. Falls erwünscht, können sie mit Inhibitoren, wie z.B. Ethinylcyclohexanol oder Diallylmaleat, oder Anti-Misting-Additiven vermischt und einer weiteren Verwendung zugeführt werden.

Das erfindungsgemäße Verfahren hat den Vorteil, dass es sehr einfach in der Durchführung ist.

Das erfindungsgemäße Verfahren hat den Vorteil, dass Polyorganosiloxane mit ungesättigten Resten reproduzierbar - unabhängig vom Silanol-Wert der Edukte - hergestellt werden können.

Ferner hat das erfindungsgemäße Verfahren den Vorteil, dass klare Produkte erhalten werden, die über einen langen Zeitraum stabil sind.

Das erfindungsgemäße Verfahren hat den Vorteil, dass auf einfache Weise durch Veränderung der Stöchiometrie die Viskosität und der Gehalt an ungesättigten Gruppen im Produkt flexibel eingestellt werden können.

Das erfindungsgemäße Verfahren hat den Vorteil, dass es ökonomisch ist, da die destillativ abgetrennten Verbindungen, wie z.B. Cyclosiloxane, wiedereingesetzt werden können.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1013 hPa, und bei Raumtemperatur, also etwa 23°C bzw. einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben sollen sich auf eine Temperatur von 25°C beziehen.

Die Viskositätsmessungen im Rahmen der Erfindung erfolgen in Anlehnung an die Vorschriften DIN 51562 (Ubbelohde) und DIN EN ISO 2555 (Brookfield). Die Messungen analog zu DIN 51562 erfolgen bei 25°C und werden in der Einheit mm²/s angegeben. Die Messungen analog zu DIN EN ISO 2555 erfolgen bei 25°C mit dem Viskosimeter DV2T Extra der Fa. Brookfield und werden in der Einheit mPa·s angegeben.

### Verfahren zur Herstellung des Sternpolymers (C1)

Ein Gemisch aus 109 g redestilliertem 1,2-Bis(methyldichlor-silyl)ethan (1,7 Equ. Cl) und 820 g Vinyldimethylchlorsilan (6,8 Equ. Cl) wird auf 10°C gekühlt. Unter Rühren und gleichzeitigem Kühlen werden in ca. 80 Minuten insgesamt 1,7 l 5-%ige HCl-Lösung so zudosiert, dass die Temperatur des Reaktionsgemisches bei 10-20°C gehalten werden kann. Danach wird 30 Minuten lang kräftig gerührt, anschließend die Phasen separiert. Die Siloxanphase wird 4x mit je 1 l Wasser gewaschen, mit 0,5 l 5-%iger NaHCO₃-Lösung neutralisiert und erneut mit 1 l Wasser nachgewaschen. Flüchtige Hydrolyseprodukte werden im Vakuum bis 80°C abgetrennt (hauptsächlich Divinyltetramethyldisiloxan). Man erhält 149,8 g einer klaren Flüssigkeit als Rückstand, die eine Viskosität von 7,2 mm²/s (25°C) hat und mit einer Jodzahl von 169,6 genau eine C=C-Doppelbindung pro 149,8 g aufweist. Das Verhältnis von Endgruppen/Verzweigungseinheit beträgt 2,57. Das Produkt enthält ca. 90 % des eingesetzten 1,2-Bis(methyldichlorsilyl)ethans in hydrolysierter Form.

### Beispiel 1

Aus dem oben hergestellten Sternpolymer (C1) mit einer Jodzahl von 169,6 wird durch Equilibrieren mit zwei linearen Siloxanen ein verzweigtes Vinylpolymer hergestellt. Hierzu werden 32,5 g des Sternpolymers (C1) mit 177,7 g eines α,ω-Divinyl-terminierten Dimethylpolysiloxans mit einer Viskosität von 25 mm²/s und einer Jodzahl von 25,0, 596,9 g eines α,ω-Dihydroxy-terminierten Dimethylpolysiloxans der Viskosität 70 mm²/s und 0,04 g KOH vermischt und bei 140°C und einem Druck von 200 hPa kondensiert und equilibriert. Nach 2 Stunden wird der Katalysator mit 0,3 g 2-Butyloctansäure bei einer Temperatur von 140°C und bei einem Druck von 1013 hPa desaktiviert. Das Rohprodukt wird bei 140°C und einem Druck von 10 hPa von den flüchtigen Bestandteilen Octamethylcyclotetrasiloxan, Decamethycyclopentasiloxan und Dodecamethylcyclohexasiloxan befreit. Man erhält ein farbloses, klares Siliconöl mit einer Viskosität von 210 mm²/s, einer Jodzahl von 10,3 und einer Trübung von 0,72 FTU.

### Beispiel 2

Aus dem oben hergestellten Sternpolymer (C1) mit einer Jodzahl von 169,6 wird durch Equilibrieren mit einem linearen und einem cyclischen Siloxan ein verzweigtes Vinylpolymer hergestellt. Hierzu werden 32,5 g des Sternpolymers (C1) mit 177,7 g eines α,ω-Divinyl-terminierten Dimethylpolysiloxans mit einer Viskosität von 25 mm²/s und einer Jodzahl von 25,0 sowie mit 596,9 g einer Mischung aus Octamethylcyclotetrasiloxan und Decamethylcyclopentasiloxan im Gewichtsverhältnis D4 zu D5 von 25 zu 75 und 0,04 g KOH vermischt und bei 140°C und einem Druck von 1013 hPa equilibriert. Nach 2 Stunden wird der Katalysator mit 0,3 g 2-Butyloctansäure bei einer Temperatur von 140°C und bei einem Druck von 1013 hPa desaktiviert. Das Rohprodukt wird bei 140°C und einem Druck von 10 hPa von flüchtigen Bestandteilen Octamethylcyclotetrasiloxan, Decamethycyclopentasiloxan und Dodecamethylcyclohexasiloxan befreit. Man erhält ein farbloses, klares Siliconöl mit einer Viskosität von 215 mm²/s, einer Jodzahl von 10,2 und einer Trübung von 1,08 FTU.

### Beispiel 3

Aus einem α,ω-Divinyl-terminierten Dimethylpolysiloxan wird durch Equilibrieren mit einem α,ω-Dihydroxy-terminierten Dimethylpolysiloxan ein α,ω-Divinyl-terminiertes Dimethylpolysiloxan hergestellt. Hierzu werden 56,1 g eines α,ω-Divinyl-terminierten Dimethylpolysiloxans mit einer Viskosität von 25 mm²/s und einer Jodzahl von 25,0 mit 165,8 g eines α,ω-Dihydroxy-terminierten Dimethylpolysiloxans mit einer Viskosität von 70 mm²/s vermischt und bei 140°C und einem Druck von 200 hPa unter Katalyse von 0,010 g KOH kondensiert und equilibriert. Nach 2 Stunden wird der Katalysator mit 0,088 g 2-Butyloctansäure bei einer Temperatur von 140°C und bei einem Druck von 1013 hPa desaktiviert. Das Rohprodukt wird bei 140°C bei 10 hPa von flüchtigen Bestandteilen befreit. Man erhält ein farbloses, klares Siliconöl mit einer Viskosität von 190 mm²/s, einer Jodzahl von 6,9 und einer Trübung von 0,98 FTU.

## Patentansprüche

1. Verfahren zur Herstellung von Organopolysiloxanen mit ungesättigten Resten, wobei
in einem 1. Schritt
Organopolysiloxane (A) enthaltend Einheiten der Formel
RₐQ_{b}SiO_{(4-a-b)/2} (I),
wobei
R gleich oder verschieden sein kann und einen einwertigen, gesättigten, gegebenenfalls mit Fluor-, Chlor- oder Bromatomen substituierten Kohlenwasserstoffrest mit 1 bis 18 Kohlenstoffatomen bedeutet,
Q gleich oder verschieden sein kann und ungesättigte Kohlenwasserstoffreste bedeutet, die aromatische und/oder aliphatische Doppelbindungen enthalten können,
a 0, 1, 2 oder 3 ist und
b 0, 1, 2 oder 3 ist,
mit der Maßgabe, dass die Summe a+b≤3 ist und die Siloxane (A) mindestens einen Rest Q aufweisen,
Organopolysiloxane (B) enthaltend Einheiten der Formel
R²_{d}(OR¹)_{f}SiO_{(4-d-f)/2} (II),
wobei
R² gleich oder verschieden sein kann und einen einwertigen, gesättigten, gegebenenfalls mit Fluor-, Chlor- oder Bromatomen substituierten Kohlenwasserstoffrest mit 1 bis 18 Kohlenstoffatomen bedeutet,
R¹ gleich oder verschieden sein kann und Wasserstoffatom oder Alkylreste mit 1 bis 4 Kohlenstoffatomen, die durch Sauerstoffatome substituiert sein können, bedeutet,
d 0, 1, 2 oder 3 ist und
f 0, 1, 2 oder 3 ist,
mit der Maßgabe, dass die Summe aus d+f≤3 ist,
gegebenenfalls Organopolysiloxanverbindungen (C), die pro Molekül mindestens eine Struktureinheit der allgemeinen Formel
O_{3-(e+g)/2}R³ₑQ¹_{g}Si-Y(SiR³ₑQ¹_{g}O_{3-(e+g)/2})_{c} (III)
enthalten, wobei
R³ gleich oder verschieden sein kann und einen einwertigen, gesättigten, gegebenenfalls mit Fluor-, Chlor- oder Bromatomen substituierten Kohlenwasserstoffrest mit 1 bis 18 Kohlenstoffatomen bedeutet,
Q¹ gleich oder verschieden sein kann und ungesättigte Kohlenwasserstoffreste bedeutet, die aromatische und/oder aliphatische Doppelbindungen enthalten können,
Y einen zwei- bis zwölfwertigen organischen Rest mit 1 bis 30 Kohlenstoffatomen, der ein oder mehrere Sauerstoffatome enthalten kann, bedeutet,
e 0 oder 1 ist,
c eine ganze Zahl von 1 bis 11 ist und
g 0 oder 1 ist,
mit der Maßgabe, dass die Summe e+g≤2 ist,
und
basische Katalysatoren (D), ausgewählt aus der Gruppe der Alkalihydroxide, Alkalialkoholate und Alkalisiloxanolate,
miteinander vermischt werden,
in einem 2. Schritt
die im 1. Schritt erhaltene Mischung bei Temperaturen von 80 bis 170°C reagieren gelassen wird und
in einem 3. Schritt
die im 2. Schritt erhaltene Reaktionsmischung mit Carbonsäurederivaten mit mindestens 4 Kohlenstoffatomen (E) neutralisiert wird.

2. Verfahren gemäß Anspruch 1, **dadurch gekennzeichnet, dass** Organopolysiloxane (A) in Mengen von 1,0 bis 40 Gew.-%, bezogen auf das Gesamtgewicht der Organosiliciumverbindungen (A), (B) und gegebenenfalls (C), eingesetzt werden.

3. Verfahren gemäß Anspruch 1 oder 2, **dadurch gekennzeichnet, dass** Organopolysiloxane (B) in Mengen von 30 bis 99 Gew.-%, bezogen auf das Gesamtgewicht der Organosiliciumverbindungen (A), (B) und gegebenenfalls (C), eingesetzt werden.

4. Verfahren gemäß einem oder mehreren der Ansprüche 1 bis 3, **dadurch gekennzeichnet, dass** Komponente (C) eingesetzt wird.

5. Verfahren gemäß einem oder mehreren der Ansprüche 1 bis 4, **dadurch gekennzeichnet, dass** als Katalysatoren (D) Alkalihydroxide eingesetzt werden.

6. Verfahren gemäß einem oder mehreren der Ansprüche 1 bis 5, **dadurch gekennzeichnet, dass** die eingesetzten Carbonsäurederivate (E) mindestens 8 Kohlenstoffatome aufweisen.

7. Verfahren gemäß einem oder mehreren der Ansprüche 1 bis 6, **dadurch gekennzeichnet, dass** der 2. Schritt bei einem Druck von 20 bis 1100 hPa durchgeführt wird.

8. Verfahren gemäß einem oder mehreren der Ansprüche 1 bis 7, **dadurch gekennzeichnet, dass**
in einem 1. Schritt
Organopolysiloxane (A), Organopolysiloxane (B) und gegebenenfalls Organopolysiloxanverbindungen (C) bei Raumtemperatur vorgelegt und Katalysator (D) bei einer Temperatur von 20 bis 90°C zudosiert und miteinander vermischt werden,
in einem 2. Schritt
die im 1. Schritt erhaltene Mischung bei Temperaturen von 90 bis 150°C und einem Druck von 20 bis 1100 hPa reagieren gelassen wird und
in einem 3. Schritt
die im 2. Schritt erhaltene Reaktionsmischung mit Komponente (E) bei einer Temperatur von 100 bis 160°C neutralisiert wird.

9. Verfahren gemäß einem oder mehreren der Ansprüche 1 bis 8, **dadurch gekennzeichnet, dass** die Reaktionsmischung nach Beendigung des 3. Schritts destillativ aufgearbeitet wird, wobei die Destillation bei Temperaturen von 140 bis 170°C und einem Druck von 1 bis 50 hPa stattfindet.

10. Verfahren gemäß einem oder mehreren der Ansprüche 1 bis 9, **dadurch gekennzeichnet, dass** das erhaltene Produkt eine Trübung von 0 bis 65 FTU aufweist , wobei die Trübung nach DIN EN 27027, wie in der Beschreibung offenbart, ermittelt wird.

## Claims

1. Method for producing organopolysiloxanes having unsaturated groups, wherein
in a first step
organopolysiloxanes (A) comprising units of the formula
RₐQ_{b}SiO_{(4-a-b)/2} (I),
where
R may be the same or different and is a monovalent, saturated hydrocarbon radical having 1 to 18 carbon atoms and optionally substituted by fluorine, chlorine or bromine atoms,
Q may be the same or different and is unsaturated hydrocarbon radicals which may comprise aromatic and/or aliphatic double bonds,
a is 0, 1, 2 or 3 and
b is 0, 1, 2 or 3,
with the proviso that the sum of a+b is ≤3 and the siloxanes (A) have at least one radical Q,
organopolysiloxanes (B) comprising units of the formula
R²_{d}(OR¹)_{f}SiO_{(4-d-f)/2} (II),
where
R² may be the same or different and is a monovalent, saturated hydrocarbon radical having 1 to 18 carbon atoms and optionally substituted by fluorine, chlorine or bromine atoms,
R¹ may be the same or different and is a hydrogen atom or alkyl radicals having 1 to 4 carbon atoms which may be substituted by oxygen atoms,
d is 0, 1, 2 or 3 and
f is 0, 1, 2 or 3,
with the proviso that the sum of d+f is ≤3,
optionally organopolysiloxane compounds (C) comprising per molecule at least one structural unit of the general formula
O_{3-(e+g)/2}R³ₑQ¹_{g}Si-Y(SiR³ₑQ¹_{g}O_{3-(e+g)/2})_{c} (III)
where
R³ may be the same or different and is a monovalent, saturated hydrocarbon radical having 1 to 18 carbon atoms and optionally substituted by fluorine, chlorine or bromine atoms,
Q¹ may be the same or different and is unsaturated hydrocarbon radicals which may comprise aromatic and/or aliphatic double bonds,
Y is a di- to dodecavalent organic radical having 1 to 30 carbon atoms, which may comprise one or more oxygen atoms,
e is 0 or 1,
c is an integer from 1 to 11 and
g is 0 or 1,
with the proviso that the sum of e+g is ≤2,
and
basic catalysts (D), selected from the group of alkali metal hydroxides, alkali metal alkoxides and alkali metal siloxanolates,
are mixed with one another,
in a second step
the mixture obtained in the first step is allowed to react at temperatures of 80°C to 170°C and
in a third step
the reaction mixture obtained in the second step is neutralized with carboxylic acid derivatives having at least 4 carbon atoms (E).

2. Method according to Claim 1, **characterized in that** organopolysiloxanes (A) are used in amounts of 1.0% to 40% by weight, based on the total weight of the organosilicon compounds (A), (B) and optionally (C).

3. Method according to Claim 1 or 2, **characterized in that** organopolysiloxanes (B) are used in amounts of 30% to 99% by weight, based on the total weight of the organosilicon compounds (A), (B) and optionally (C).

4. Method according to one or more of Claims 1 to 3, **characterized in that** component (C) is used.

5. Method according to one or more of Claims 1 to 4, **characterized in that** alkali metal hydroxides are used as catalysts (D).

6. Method according to one or more of Claims 1 to 5, **characterized in that** the carboxylic acid derivatives (E) used have at least 8 carbon atoms.

7. Method according to one or more of Claims 1 to 6, **characterized in that** the second step is carried out at a pressure of 20 to 1100 hPa.

8. Method according to one or more of Claims 1 to 7, **characterized in that**
in a first step
organopolysiloxanes (A), organopolysiloxanes (B) and optionally organopolysiloxane compounds (C) are initially charged at room temperature and catalyst (D) is metered in at a temperature of 20°C to 90°C and they are mixed with one another,
in a second step
the mixture obtained in the first step is allowed to react at temperatures of 90°C to 150°C and a pressure of 20 to 1100 hPa and
in a third step
the reaction mixture obtained in the second step is neutralized with component (E) at a temperature of 100°C to 160°C.

9. Method according to one or more of Claims 1 to 8, **characterized in that** the reaction mixture after completion of the third step is worked up by distillation, the distillation being carried out at temperatures of 140°C to 170°C and a pressure of 1 to 50 hPa.

10. Method according to one or more of Claims 1 to 9, **characterized in that** the product obtained has a turbidity of 0 to 65 FTU, the turbidity being determined in accordance with DIN EN 27027, as disclosed in the description.

## Revendications

1. Procédé de préparation d'organopolysiloxanes présentant des radicaux insaturés, dans lequel dans une 1re étape
des organopolysiloxanes (A) contenant des motifs de formule
RₐQ_{b}SiO_{(4-a-b)/2} (I),
dans laquelle
R peut être identique ou différent et signifie un radical hydrocarboné monovalent, saturé, le cas échéant substitué par des atomes de fluor, de chlore ou de brome, comprenant 1 à 18 atomes de carbone,
Q peut être identique ou différent et signifie des radicaux hydrocarbonés insaturés, qui peuvent contenir des doubles liaisons aromatiques et/ou aliphatiques,
a représente 0, 1, 2 ou 3 et
b représente 0, 1, 2 ou 3,
étant entendu que la somme a + b ≤ 3 et que les siloxanes (A) présentent au moins un radical Q,
des organopolysiloxanes (B) contenant des motifs de formule
R²_{d}(OR¹)_{f}SiO_{(4-d-f)/2} (II),
dans laquelle
R² peut être identique ou différent et signifie un radical hydrocarboné monovalent, saturé, le cas échéant substitué par des atomes de fluor, de chlore ou de brome, comprenant 1 à 18 atomes de carbone,
R¹ peut être identique ou différent et signifie un atome d'hydrogène ou des radicaux alkyle comprenant 1 à 4 atomes de carbone qui peuvent être substitués par des atomes d'oxygène,
d représente 0, 1, 2 ou 3 et
f représente 0, 1, 2 ou 3,
étant entendu que la somme de d + f ≤ 3,
le cas échéant des composés d'organopolysiloxane (C), qui contiennent par molécule au moins un motif structural de formule générale
O_{3-(e+g)}/₂R³ₑQ¹_{g}Si-Y(SiR³ₑQ¹_{g}O_{3-(e+g)/2})c (III)
dans laquelle
R³ peut être identique ou différent et signifie un radical hydrocarboné monovalent, saturé, le cas échéant substitué par des atomes de fluor, de chlore ou de brome, comprenant 1 à 18 atomes de carbone,
Q¹ peut être identique ou différent et signifie des radicaux hydrocarbonés insaturés, qui peuvent contenir des doubles liaisons aromatiques et/ou aliphatiques,
Y signifie un radical organique bivalent à dodécavalent, comprenant 1 à 30 atomes de carbone, qui peut contenir un ou plusieurs atomes d'oxygène,
e représente 0 ou 1,
c représente un nombre entier de 1 à 11 et
g représente 0 ou 1,
étant entendu que la somme de e + g ≤ 2 et
des catalyseurs basiques (D), choisis dans le groupe des hydroxydes de métal alcalin, des alcoolates de métal alcalin et des siloxanolates de métal alcalin,
sont mélangés les uns avec les autres,
dans une 2e étape
le mélange obtenu dans la 1re étape est laissé à réagir à des températures de 80 à 170°C et
dans une 3e étape
le mélange réactionnel obtenu dans la 2e étape est neutralisé avec des dérivés d'acide carboxylique comprenant au moins 4 atomes de carbone (E).

2. Procédé selon la revendication 1, **caractérisé en ce que** les organopolysiloxanes (A) sont utilisés en des quantités de 1,0 à 40% en poids, par rapport au poids total des composés organosiliciés (A), (B) et le cas échéant (C).

3. Procédé selon la revendication 1 ou 2, **caractérisé en ce que** les organopolysiloxanes (B) sont utilisés en des quantités de 30 à 99% en poids, par rapport au poids total des composés organosiliciés (A), (B) et le cas échéant (C).

4. Procédé selon l'une ou plusieurs des revendications 1 à 3, **caractérisé en ce que** le composant (C) est utilisé.

5. Procédé selon l'une ou plusieurs des revendications 1 à 4, **caractérisé**
**en ce qu'**on utilise, comme catalyseurs (D), des hydroxydes de métal alcalin.

6. Procédé selon l'une ou plusieurs des revendications 1 à 5, **caractérisé en ce que** les dérivés d'acide carboxylique (E) utilisés présentent au moins 8 atomes de carbone.

7. Procédé selon l'une ou plusieurs des revendications 1 à 6, **caractérisé en ce que** la 2e étape est effectuée à une pression de 20 à 1100 hPa.

8. Procédé selon l'une ou plusieurs des revendications 1 à 7, **caractérisé en ce que**
dans une 1re étape
des organopolysiloxanes (A), des organopolysiloxanes (B) et le cas échéant des composés d'organopolysiloxane (C) sont disposés au préalable à température ambiante, le catalyseur (D) est ajouté en dosant à une température de 20 à 90°C et ils sont mélanges les uns avec les autres, dans une 2e étape
le mélange obtenu dans la 1re étape est laissé à réagir à des températures de 90 à 150°C et à une pression de 20 à 1100 hPa et
dans une 3e étape
le mélange réactionnel obtenu dans la 2e étape est neutralisé avec le composant (E) à une température de 100 à 160°C.

9. Procédé selon l'une ou plusieurs des revendications 1 à 8, **caractérisé en ce que** le mélange réactionnel est traité par distillation à la fin de la 3e étape, la distillation ayant lieu à des températures de 140 à 170°C et à une pression de 1 à 50 hPa.

10. Procédé selon l'une ou plusieurs des revendications 1 à 9, **caractérisé en ce que** le produit obtenu présente un trouble de 0 à 65 FTU, le trouble étant déterminé selon la norme DIN EN 27027, comme divulgué dans la description.
